# EUROPÄISCHE PATENTSCHRIFT

(11) **EP 2 441 595 B1**
(45) Veröffentlichungstag und Bekanntmachung des Hinweises auf die Patenterteilung: **19.02.2020**
(21) Anmeldenummer: 11007170.1
(22) Anmeldetag: 06.09.2011
(51) Int. Cl.: B60C 11/24, B60P 1/00, B60W 40/12, B60W 50/14, B60W 50/00, B60W 30/186, G01C 21/34, G01C 21/36

(54) **Fahrerassistenzsystem für ein Kraftfahrzeug und entsprechendes Betriebsverfahren**
Driver assistance system for a motor vehicle and method for operating same
Système d'assistance du conducteur pour un véhicule automobile et procédé de fonctionnement correspondant

(30) Priorität: 13.10.2010 DE 102010048322
(43) Veröffentlichungstag der Anmeldung: 18.04.2012
(73) Patentinhaber: MAN Truck & Bus SE, 80995 München (DE)
(72) Erfinder: Dörner, Karlheinz, 85757 Karlsfeld (DE); Zimmermann, Andreas, 80995 München (DE); Heyes, Daniel, 81247 München (DE); Huber, Martin, 81243 München (DE); Drimml, Peter, 85221 Dachau (DE); Michel, Britta, 81675 München (DE)
(74) Vertreter: v. Bezold & Partner Patentanwälte - PartG mbB

(56) Entgegenhaltungen:
- EP-A2- 2 159 542
- DE-A1-102005 047 333
- DE-A1-102007 037 329
- DE-A1-102009 015 841
- JP-A- 2002 188 932

## Beschreibung

Die Erfindung betrifft ein Fahrerassistenzsystem für ein Kraftfahrzeug, insbesondere für einen Lastkraftwagen (Lkw), zur Unterstützung eines Kraftfahrzeugführers bei der Wahl einer verbrauchsmindernden Fahrweise. Weiterhin umfasst die Erfindung ein entsprechendes Betriebsverfahren.

Beim Betrieb von Kraftfahrzeugen kann der Fahrzeugführer in der Regel zwischen verschiedenen Fahrweisen (z.B. verschiedenen Fahrtrouten) wählen, die mit unterschiedlichen Werten für Kraftstoffverbrauch, Verschleiß und Fahrtdauer verbunden sind.

Falls beispielsweise ein Fahrzeugführer eines Sattelzugs den Sattelzug wenden möchte, so besteht eine Möglichkeit hierzu darin, den Sattelzug ohne Umweg auf engstem Raum zu wenden, was mit einem minimalen Zeitaufwand und einem ebenfalls minimalen Kraftstoffaufwand verbunden ist, aber zu einem erheblichen Reifenverschleiß führt, da die Reifen des Sattelaufliegers dabei axial auf dem Untergrund reiben.

Alternativ besteht als Fahrweise zum Wenden des Sattelzugs die Möglichkeit, dass der Fahrzeugführer des Sattelzugs einen nah gelegenen Kreisverkehr anfährt und dort mit nur geringem Reifenverschleiß wendet, was jedoch mit einem zusätzlichen Zeitaufwand und einem Kraftstoffmehrverbrauch verbunden ist.

Beim Betrieb von Kraftfahrzeugen bestehen also in der Regel kollidierende Anforderungen hinsichtlich Kraftstoffverbrauch, Verschleiß und Zeitaufwand, so dass der Fahrzeugführer bei der Wahl der Fahrweise einen Kompromiss zwischen diesen kollidierenden Anforderungen finden muss. Dies ist für den Fahrzeugführer jedoch äußerst schwierig, da der Fahrzeugführer die Auswirkungen einer bestimmten Fahrweise auf Kraftstoffverbrauch, Verschleiß und Zeitaufwand nur schätzen kann.

Zwar ist aus DE 10 2009 031 085 A1 ein Fahrerassistenzsystem bekannt, das eine Fahrgeschwindigkeitsempfehlung abgibt und bei der Festlegung der Fahrgeschwindigkeitsempfehlung einen Kompromiss aus der zu erwartenden Verbrauchsminderung einerseits und dem zu erwartenden zeitlichen Mehraufwand andererseits bildet. Auch bei diesem Fahrerassistenzsystem wird der zu erwartende Verschleiß (z.B. Reifenverschleiß) des Kraftfahrzeugs jedoch nicht berücksichtigt.

Auch aus der EP 2 159 542 A2 und der JP 2002 188932 A sind Fahrerassistenzsysteme bekannt, die dem Fahrer eines Kraftfahrzeugs die Möglichkeit bieten, auf Basis eines zu erwartenden Treibstoffverbrauchs eine Routenwahlentscheidung zu treffen. Auch in diesen Dokumenten wird jedoch ein zu erwartender Verschleiß des Fahrzeugs nicht berücksichtig.

Die Offenlegungsschrift DE 10 2009 015 841 A1 offenbart in diesem Zusammenhang ein Verfahren um den Kraftstoffverbrauch und/oder den Verschleiß für einzelne Fahrzeugtypen bzw. für Fahrzeuggruppen abzuschätzen. Dabei wird der Verschleiß eines Funktionsbauteils eines Fahrzeugs anhand einer erstellten simulierten Verkehrssituation abgeschätzt, die von dem Fahrzeug virtuell durchfahren wird.

Weiterhin offenbart die Offenlegungsschrift DE 10 2005 047 333 A1 ein Verfahren zur Routenplanung mittels eines Navigationsgeräts, wobei neben der Start- und Zielposition auch weitere Routenkriterien (z. B. Schadstoffe, Lärm, Geruch, Reifenabrieb) in die Berechnung der geeignetsten Route miteinbezogen werden. Jedoch wird dem Kraftfahrzeugführer hierbei nicht die Möglichkeit gegeben, seine Fahrweise auf Basis des Verschleißes des Kraftfahrzeugs bzw. eines Teils des Kraftfahrzeugs zu optimieren.

Ferner offenbart auch die Offenlegungsschrift DE 10 2007 037 329 A1 ein Verfahren zur Bestimmung einer optimalen Fahrstrategie eines Kraftfahrzeugs für eine Fahrt von einem Startpunkt zu einem Zielpunkt, bei dem auch der Verschleiß des Kraftfahrzeugs berücksichtigt wird. Allerdings ist auch hier keine Möglichkeit vorgesehen, dem Kraftfahrzeugführer die Möglichkeit zu geben, seine Fahrweise auf Basis des Verschleißes des Kraftfahrzeugs bzw. eines Teils des Kraftfahrzeugs zu optimieren.

Die Berücksichtigung des Materialverschleißes des Kraftfahrzeugs bei der Optimierung der Fahrweise ist jedoch nicht nur aus Kostengesichtspunkten vorteilhaft, sondern auch unter Umweltgesichtspunkten, da ein Materialverschleiß auch im Rahmen einer umfassenden Umweltbilanz zu berücksichtigen ist, so dass möglicherweise ein geringfügiger Mehrverbrauch unter Umweltgesichtspunkten akzeptabel ist, wenn dadurch der Materialverschleiß wesentlich verringert werden kann.

Der Erfindung liegt deshalb die Aufgabe zugrunde, ein Fahrerassistenzsystem und ein entsprechendes Betriebsverfahren zu schaffen, das bei der Optimierung der Fahrweise auch den Verschleiß berücksichtigt, der durch jeweilige Fahrweise verursacht wird.

Diese Aufgabe wird durch ein Fahrerassistenzsystem gemäß Anspruch 12 und ein Betriebsverfahren gemäß Anspruch 1 gelöst.

Die Erfindung umfasst die allgemeine technische Lehre, bei der Bewertung der verschiedenen möglichen Fahrweisen (z.B. alternative Fahrtrouten) des Kraftfahrzeugs nicht nur einen Verbrauchsparameter (z.B. absoluter oder relativer Mehrverbrauch) zu berücksichtigen, sondern auch einen Verschleißparameter (z.B. Reifenverschleiß, Erhöhung der Standzeit der Reifen).

Die Erfindung sieht deshalb vor, dass eine bestimmte Fahrweise des Kraftfahrzeugs vorgegeben wird, vorzugsweise in einem ersten Schritt, wobei es sich beispielsweise um eine bestimmte Fahrtroute handeln kann. Der im Rahmen der Erfindung verwendete Begriff einer Fahrweise ist jedoch nicht auf eine Fahrtroute als konkretes Beispiel beschränkt, sondern umfasst auch andere unterschiedliche Fahrweisen, wie beispielsweise ein Betrieb des Kraftfahrzeugs mit Winterreifen oder alternativ mit Sommerreifen. Weiterhin kann sich die zu beurteilende Fahrweise dadurch auszeichnen, dass ein Lastkraftwagen mit einem Hänger oder ohne einen Hänger fährt, um die Auswirkungen dieser Unterschiede hinsichtlich Kraftstoffverbrauch, Verschleiß und Fahrdauer beurteilen zu können.

Weiterhin sieht die Erfindung dann vor, dass für die vorgegebene Fahrweise ein Verbrauchsparameter des Kraftfahrzeugs ermittelt wird, wobei der Verbrauchsparameter den Kraftstoffverbrauch des Kraftfahrzeugs bei der vorgegebenen Fahrweise wiedergibt. Beispielsweise kann es sich bei dem Verbrauchsparameter im Rahmen der Erfindung um den absoluten Kraftstoffverbrauch auf einer bestimmten Fahrtroute handeln. Es besteht jedoch alternativ auch die Möglichkeit, dass es sich bei dem ermittelten Verbrauchsparameter um einen relativen Mehrverbrauch gegenüber einer verbrauchsoptimalen Fahrtroute handelt.

Der im Rahmen der Erfindung verwendete Begriff eines Verbrauchsparameters ist also allgemein zu verstehen und nicht auf die vorstehend genannten Beispiele beschränkt. So besteht im Rahmen der Erfindung wahlweise auch die Möglichkeit, dass der Verbrauchsparameter den Kraftstoffverbrauch unmittelbar oder nur mittelbar wiedergibt.

Als Neuerung gegenüber dem Stand der Technik sieht die Erfindung nun vor, dass für die vorgegebene Fahrweise zusätzlich ein Verschleißparameter ermittelt wird, der den Verschleiß des Kraftfahrzeugs oder eines Teils des Kraftfahrzeugs bei der vorgegebenen Fahrweise wiedergibt, wobei der Verschleißparameter mindestens eine der folgenden Größen wiedergibt: Standzeit der Reifen des Kraftfahrzeugs, Standzeit von Bauteilen des Kraftfahrzeugs. Beispielsweise kann der ermittelte Verschleißparameter den Reifenverschleiß des Kraftfahrzeugs wiedergeben, da beispielsweise Lastkraftwagen und Sattelzüge beim Wenden auf einem engen Raum einen erheblichen Reifenverschleiß haben, der zu einer entsprechenden Verringerung der Standzeit der Reifen führt. Der Verschleißparameter kann jedoch auch den Verschleiß anderer Teile des Kraftfahrzeugs wiedergeben, wie beispielsweise des Motors, des Getriebes, der Bremsen oder der Kupplung, um nur einige Beispiele zu nennen. Der im Rahmen der Erfindung verwendete Begriff eines Verschleißparameters ist also allgemein zu verstehen und soll lediglich wiedergeben, welchen Einfluss die jeweilige Fahrweise auf den Verschleiß im Allgemeinen hat.

Weiterhin sieht die Erfindung vor, dass sowohl der Verbrauchsparameter als auch der Verschleißparameter dem Kraftfahrzeugführer angezeigt werden, damit der Kraftfahrzeugführer bei der Bewertung der jeweiligen Fahrweise hinsichtlich Kraftstoffverbrauch und Materialverschleiß eine gute Informationsgrundlage hat. Der Kraftfahrzeugführer kann also besser abschätzen, ob ein bestimmter Umweg über eine alternative Fahrtroute zu einer erheblichen Verringerung des Materialverschleißes führt, um den Kraftstoffmehrverbrauch auf dem Umweg zu rechtfertigen.

Vorzugsweise wird im Rahmen der Erfindung zusätzlich zu dem Verbrauchsparameter und dem Verschleißparameter auch ein Fahrtdauerparameter für die vorgegebene Fahrweise ermittelt, wobei der Fahrtdauerparameter die Fahrtdauer des Kraftfahrzeuges bei der vorgegebenen Fahrweise unmittelbar oder mittelbar wiedergibt. Beispielsweise kann der Fahrtdauerparameter den zusätzlichen Zeitaufwand wiedergeben, der beim Befahren einer alternativen Fahrtroute entsteht. Der im Rahmen der Erfindung verwendete Begriff eines Fahrtdauerparameters ist jedoch allgemein zu verstehen und nicht auf den absoluten oder relativen Zeitmehraufwand beschränkt, der mit einer bestimmten Fahrweise verbunden ist. Der auf diese Weise ermittelte Fahrtdauerparameter der vorgegebenen Fahrweise wird dann ebenfalls dem Kraftfahrzeugführer angezeigt, so dass der Kraftfahrzeugführer bei der Bewertung der vorgegebenen Fahrweise neben dem Verbrauchsparameter und dem Verschleißparameter auch den Fahrtdauerparameter berücksichtigen kann.

In einer Variante der Erfindung werden die vorstehend genannten Parameter (Verbrauchsparameter, Verschleißparameter und/oder Fahrtdauerparameter) während der Fahrt gemessen und dann rückwirkend ermittelt, nachdem das Kraftfahrzeug die vorgegebene Fahrweise (z.B. eine bestimmte Fahrtroute) absolviert hat. Die Parameter werden dann auch angezeigt, nachdem das Kraftfahrzeug die vorgegebene Fahrweise absolviert hat. In dieser Variante der Erfindung erfolgt also eine retrospektive Ermittlung der relevanten Parameter, so dass der Fahrzeugführer rückblickend beurteilen kann, ob die ausgewählte Fahrweise einen guten Kompromiss zwischen Kraftstoffverbrauch, Materialverschleiß und Fahrtdauer darstellt.

In einer anderen Variante der Erfindung werden die vorstehend genannten Parameter (Verbrauchsparameter, Verschleißparameter und/oder Fahrtdauerparameter) dagegen prognostisch für den Fall berechnet, dass das Kraftfahrzeug entsprechend der vorgegebenen Fahrweise betrieben wird. Beispielsweise kann hierbei eine Fahrtroute von einem Navigationssystem vorgegeben werden, wobei dann im Voraus berechnet wird, wie die Werte für Kraftstoffverbrauch, Verschleiß und/oder Zeitaufwand ausfallen, wenn das Kraftfahrzeug die vorgegebene Fahrtroute befährt. In dieser Variante der Erfindung kann der Kraftfahrzeugführer die vorgegebene Fahrweise also im Voraus bewerten und dann eine optimale Fahrweise auswählen.

Bei dieser Variante der Erfindung werden vorzugsweise mehrere verschiedene alternative Fahrweisen vorgegeben, wobei es sich beispielsweise um verschiedene alternative Fahrtrouten handeln kann. Die vorstehend genannten Parameter (Verbrauchsparameter, Verschleißparameter und/oder Fahrtdauerparameter) werden dann vorzugsweise individuell für jede der vorgegebenen Fahrweisen berechnet und dem Fahrzeugführer angezeigt, damit der Fahrzeugführer die verschiedenen möglichen Fahrweisen bewerten und eine der Fahrweisen auswählen kann.

Hierbei besteht die Möglichkeit, dass die verschiedenen Parameter (Verbrauchsparameter, Verschleißparameter und/oder Fahrtdauerparameter) als Relativwerte ermittelt und dargestellt werden. Beispielsweise kann dem Fahrzeugführer angezeigt werden, welcher relative Mehrverbrauch auf einer bestimmten Fahrtroute entsteht und wie sich die Standzeit der Reifen auf der Fahrtroute ändert. Hierbei kann eine der vorgegebenen Fahrweisen als Referenzwert dienen und einen minimalen Kraftstoffverbrauch, einen minimalen Verschleiß oder eine minimale Fahrtdauer aufweisen. Der Fahrzeugführer kann dann eine Information darüber erhalten, wie stark die ermittelten Parameter absolut oder relativ von den Optimalwerten abweichen.

Es wurde bereits eingangs bei der Beschreibung des Standes der Technik erwähnt, dass beim Wenden eines Lastkraftwagens (z.B. eines Sattelzugs) ein erheblicher Reifenverschleiß auftreten kann, wenn der Lastkraftwagen ohne Umwege auf der Stelle gewendet wird. Es kann deshalb vorteilhaft sein, wenn eine alternative Wendestrecke befahren wird, die zwar einen Umweg darstellt, aber trotzdem mit einem wesentlich geringeren Reifenverschleiß verbunden ist. Hierbei werden also zwei Fahrweisen miteinander verglichen, nämlich zum einen das Wenden des Lastkraftwagens auf der Stelle und zum anderen das Wenden des Lastkraftwagens durch Befahren einer alternativen Fahrtroute, die beispielsweise einen Kreisverkehr enthalten kann. Der Kraftfahrzeugführer kann dann beispielsweise an einem Navigationssystem eingeben, dass er das Kraftfahrzeug wenden möchte. Das Navigationssystem berechnet dann mittels einer Recheneinheit die vorstehend genannten Parameter (Verbrauchsparameter, Verschleißparameter und/oder Fahrtdauerparameter) für den Fall, dass das Kraftfahrzeug ohne einen Umweg auf der Stelle gewendet wird. Darüber hinaus ermittelt das Navigationssystem mindestens einen alternativen Routenvorschlag für das Wenden des Kraftfahrzeugs, wobei der Routenvorschlag beispielsweise einen Kreisverkehr enthalten kann, der es in einfacher Weise ermöglicht, das Kraftfahrzeug zu wenden. Die Recheneinheit berechnet dann für diese alternative Fahrtroute ebenfalls die vorstehend genannten Parameter (Verbrauchsparameter, Verschleißparameter und/oder Fahrtdauerparameter), um die alternative Fahrtroute hinsichtlich Mehrverbrauch, Verschleißminderung und zusätzlichem Zeitaufwand bewerten zu können.

Es wurde bereits vorstehend erwähnt, dass im Rahmen der Erfindung verschiedene Fahrweisen (z.B. mehrere alternative Fahrtrouten) vorgegeben werden können, um für die einzelnen Fahrweisen prognostisch den Mehrverbrauch, die Verschleißminderung und/oder den zusätzlichen Zeitaufwand ermitteln zu können. In einer Variante der Erfindung ist zusätzlich vorgesehen, dass aus den verschiedenen Parametern (Verbrauchsparameter, Verschleißparameter und/oder Fahrtdauerparameter) ein Rangwert für eine nachfolgende Optimierungsauswahl berechnet wird, wobei im Rahmen der Berechnung des Rangwerts die verschiedenen Parameter (Verbrauchsparameter, Verschleißparameter und/oder Fahrtdauerparameter) mit unterschiedlichen Gewichtungsfaktoren eingehen könne. Die Rangwerte für die verschiedenen Fahrweisen werden dann vorzugsweise dem Fahrzeugführer angezeigt, damit der Kraftfahrzeugführer schnell und einfach entscheiden kann, welche Fahrweise er auswählt.

Ferner ist zu erwähnen, dass die Erfindung nicht auf das vorstehend beschriebene Betriebsverfahren beschränkt ist, sondern auch ein entsprechend ausgebildetes Fahrerassistenzsystem umfasst. Schließlich umfasst die Erfindung auch ein Kraftfahrzeug (z.B. einen Lastkraftwagen), der mit einem derartigen Fahrerassistenzsystem ausgestattet ist.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine stark vereinfachte schematische Darstellung eines erfindungsgemäßen Fahrassistenzsystems,
- Figur 2: eine Bildschirmansicht eines Bildschirms des Fahrerassistenzsystems aus Figur 1,
- Figur 3: ein Flussdiagramm zur Verdeutlichung des Betriebsverfahrens des erfindungsgemäßen Fahrerassistenzsystems gemäß Figur 1,
- Figur 4: einen Bildschirminhalt eines nichterfindungsgemäßen Fahrerassistenzsystems zum Vergleich von verschiedenen Fahrtrouten, sowie
- Figur 5: eine Abwandlung von Figur 4, wobei jeweils Relativwerte dargestellt werden.

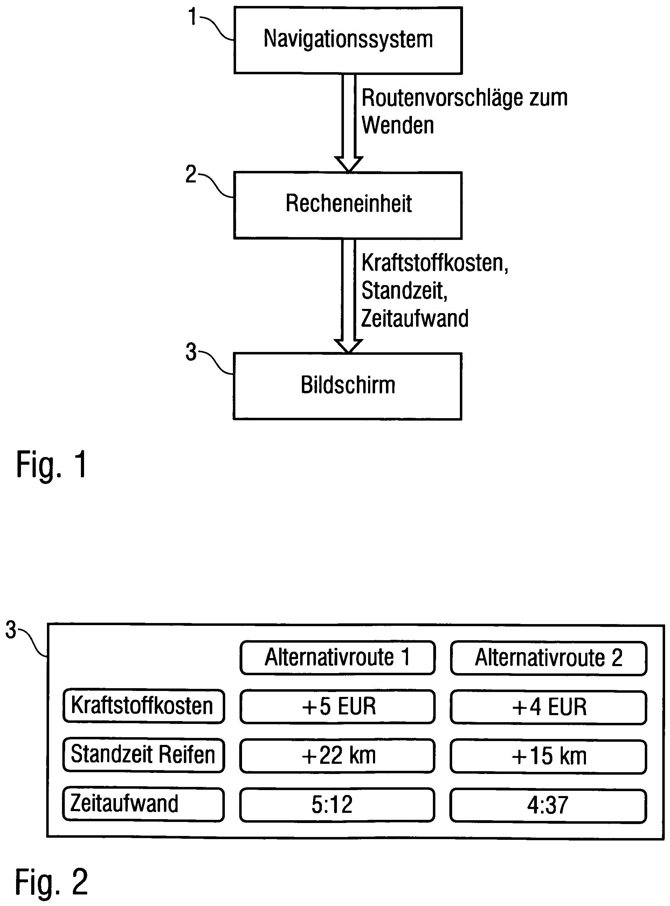

Figur 1 zeigt eine stark vereinfachte und schematisierte Darstellung eines erfindungsgemäßen Fahrerassistenzsystems, das beispielsweise in einem Lastkraftwagen (Lkw) eingesetzt werden kann, um es dem Fahrzeugführer des Lastkraftwagens zu ermöglichen, bei der Wahl der Fahrweise die kollidierenden Anforderungen hinsichtlich Kraftstoffverbrauch, Verschleiß und Fahrtdauer in einem möglichst guten Kompromiss zu erfüllen.

Hierzu weist das erfindungsgemäße Fahrerassistenzsystem ein Navigationssystem 1 auf, das weitgehend herkömmlich ausgebildet sein kann und deshalb nicht näher beschrieben werden muss. Das Navigationssystem 1 bietet jedoch die Möglichkeit, dass der Fahrzeugführer Routenvorschläge zum Wenden des Lastkraftwagens anfordern kann. Das Navigationssystem 1 berechnet dann mehrere alternative Routenvorschläge zum Wenden des Lastkraftwagens, wobei einer der Routenvorschläge vorsieht, dass der Lastkraftwagen ohne einen Umweg auf der Stelle gewendet wird.

Die von dem Navigationssystem 1 berechneten Routenvorschläge zum Wenden des Lastkraftwagens werden dann an eine Recheneinheit 2 weitergegeben, die zunächst für jeden der Routenvorschläge den Kraftstoffverbrauch, den Reifenverschleiß und den Zeitaufwand berechnet. Diese Parameter werden dann auf einem Bildschirm 3 dargestellt, so dass der Fahrzeugführer die verschiedenen Routenvorschläge und deren Vor-/Nachteile intuitiv bewerten kann.

So zeigt Figur 2 einen typischen Bildschirminhalt, bei dem zwei Routenvorschläge ("Alternativroute 1", "Alternativroute 2") miteinander verglichen werden. Hierbei werden für jeden der beiden Routenvorschläge die Kraftstoffkosten, die Standzeit der Reifen und der Zeitaufwand dargestellt. Der Kraftfahrzeugführer kann dann schnell entscheiden, ob die Erhöhung der Standzeit der Reifen die erhöhten Kraftstoffkosten auf der Alternativroute ausgleicht.

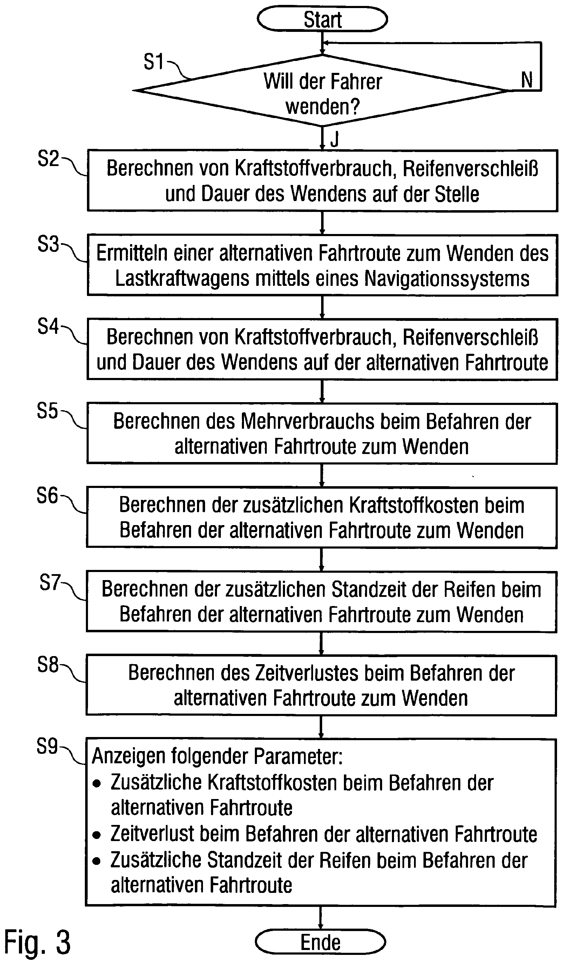

Im Folgenden wird nun unter Bezugnahme auf das Flussdiagramm in Figur 3 das Betriebsverfahren des Fahrerassistenzsystems gemäß Figur 1 erläutert.

In einem ersten Schritt S1 überprüft das Navigationssystem 1 zunächst, ob der Kraftfahrzeugführer den Lastkraftwagen wenden möchte. Hierzu kann der Kraftfahrzeugführer beispielsweise eine besondere Taste an dem Navigationssystem 1 betätigen, um die Berechnung einer optimalen Wenderoute anzufordern.

Falls dies der Fall ist, so berechnet die Recheneinheit 2 zunächst in einem Schritt S2 den Kraftstoffverbrauch, den Reifenverschleiß und die Dauer des Wendens auf der Stelle. Anschließend ermittelt das Navigationssystem 1 in einem Schritt S3 eine alternative Fahrtroute zum Wenden des Lastkraftwagens.

Für diese alternative Fahrtroute berechnet die Recheneinheit 2 dann in einem Schritt S4 den Kraftstoffverbrauch, den Reifenverschleiß und die Dauer des Wendens auf der alternativen Fahrtroute.

In einem Schritt S5 berechnet die Recheneinheit 2 dann den absoluten Mehrverbrauch beim Befahren der alternativen Fahrtroute im Vergleich zu dem Wenden auf der Stelle.

Ein Schritt S6 sieht dann vor, dass die Recheneinheit 2 die zusätzlichen Kraftstoffkosten berechnet, wenn die alternative Fahrtroute zum Wenden befahren wird. Hierzu wird einfach der zuvor in dem Schritt S5 berechnete Mehrverbrauch mit einem vorgegebenen Kraftstoffpreis multipliziert.

Darüber hinaus berechnet die Recheneinheit 2 dann in einem Schritt S7 die zusätzliche Standzeit der Reifen im Vergleich zum Wenden auf der Stelle, die daraus resultiert, dass beim Wenden auf der Stelle ein übermäßig hoher Reifenverschleiß auftritt.

Ferner wird dann in einem Schritt S8 noch der Zeitverlust beim Befahren der alternativen Fahrtroute im Vergleich zum Wenden auf der Stelle berechnet.

Schließlich werden dann auf dem Bildschirm 3 in einem Schritt S9 die zusätzlichen Kraftstoffkosten, der Zeitverlust und die zusätzliche Standzeit der Reifen für den Fall angezeigt, dass zum Wenden des Lastkraftwagens die alternative Fahrtroute befahren wird.

Der Kraftfahrzeugführer kann dann aufgrund dieser Parameter entscheiden, ob sich das Befahren der alternativen Fahrtroute lohnt.

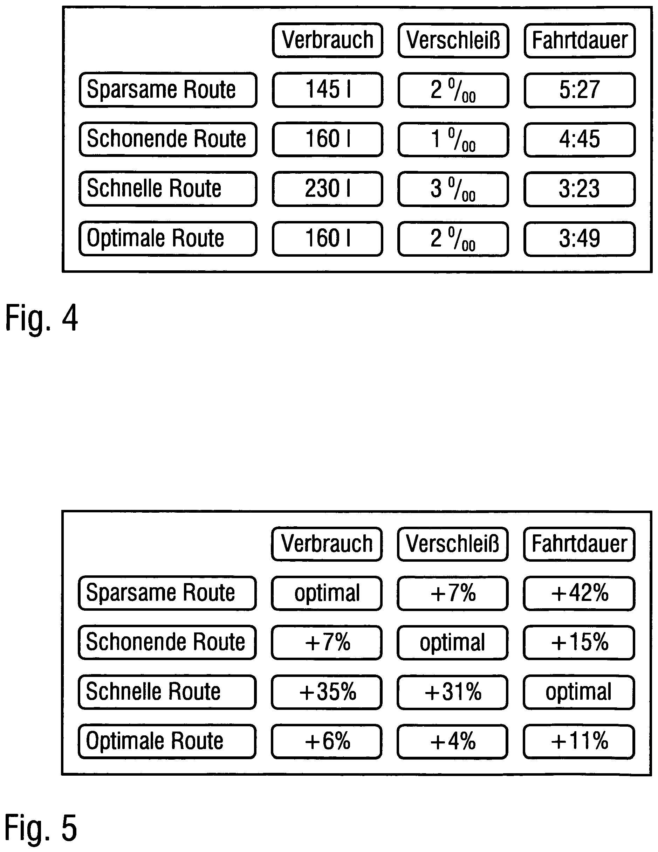

Die Figuren 4 und 5 zeigen, nicht-erfindungsgemäße Bildschirminhalte, die für verschiedene Fahrtrouten die Werte des Verbrauchs, des Verschleißes und der Fahrtdauer anzeigen, um dem Kraftfahrzeugführer die Auswahl einer optimalen Route zu ermöglichen. Hierbei wird jeweils eine sparsame Route, eine materialschonende Route, eine schnelle Route und eine optimale Route angezeigt, wobei die optimale Route von der Recheneinheit 2 berechnet wird. Zur Auswahl der optimalen Route werden hierbei die verschiedenen Parameter (Verbrauch, Verschleiß und Fahrtdauer) mit bestimmten Gewichtungsfaktoren gewichtet, um dann die optimale Fahrtroute auszuwählen.

### Bezugszeichen

1 Navigationssystem
2 Recheneinheit
3 Bildschirm

## Patentansprüche

1. Betriebsverfahren für ein Fahrerassistenzsystem eines Kraftfahrzeugs, insbesondere eines Lastkraftwagens, zur Unterstützung eines Kraftfahrzeugführers bei der Wahl einer verbrauchsmindernden Fahrweise, mit den folgenden Schritten:
- Vorgabe der Fahrweise des Kraftfahrzeugs,
- Ermitteln eines Verbrauchsparameters des Kraftfahrzeugs für die vorgegebene Fahrweise, wobei der Verbrauchsparameter den Kraftstoffverbrauch des Kraftfahrzeugs bei der vorgegebenen Fahrweise wiedergibt,
- Anzeigen des Verbrauchsparameters für den Kraftfahrzeugführer,
**gekennzeichnet durch** folgende Schritte:
- Ermitteln eines Verschleißparameters des Kraftfahrzeugs für die vorgegebene Fahrweise, wobei der Verschleißparameter den Verschleiß des Kraftfahrzeugs oder eines Teils des Kraftfahrzeugs bei der vorgegebenen Fahrweise wiedergibt, und
- Anzeigen des Verschleißparameters für den Kraftfahrzeugführer,
wobei der Verschleißparameter mindestens eine der folgenden Größen wiedergibt:
- Standzeit der Reifen des Kraftfahrzeugs,
- Standzeit von Bauteilen des Kraftfahrzeugs.

2. Betriebsverfahren nach Anspruch 1, weiterhin mit den folgenden Schritten:
- Ermitteln eines Fahrtdauerparameters für die vorgegebene Fahrweise, wobei der Fahrtdauerparameter die Fahrtdauer des Kraftfahrzeugs bei der vorgegebenen Fahrweise wiedergibt, und
- Anzeigen des Fahrtdauerparameters für den Kraftfahrzeugführer.

3. Betriebsverfahren nach einem der vorhergehenden Ansprüche, wobei
- der Verbrauchsparameter und/oder der Verschließparameter und/oder der Fahrtdauerparameter gemessen und rückwirkend ermittelt wird, nachdem das Kraftfahrzeug die vorgegebene Fahrweise absolviert hat, und
- der Verbrauchsparameter und/oder der Verschließparameter und/oder der Fahrtdauerparameter dem Fahrzeugführer angezeigt wird, nachdem das Kraftfahrzeug die vorgegebene Fahrweise absolviert hat.

4. Betriebsverfahren nach einem der Ansprüche 1 oder 2, wobei
- der Verbrauchsparameter und/oder der Verschleißparameter und/oder der Fahrtdauerparameter prognostisch für den Fall berechnet wird, dass das Kraftfahrzeug entsprechend der vorgegebenen Fahrweise betrieben wird, und
- der Verbrauchsparameter und/oder der Verschleißparameter und/oder der Fahrtdauerparameter dem Fahrzeugführer angezeigt wird, bevor das Kraftfahrzeug die vorgegebene Fahrweise absolviert hat.

5. Betriebsverfahren nach einem der vorhergehenden Ansprüche, wobei
- mehrere verschiedene Fahrweisen für das Kraftfahrzeug vorgegeben werden, und
- individuell für jede der vorgegebenen Fahrweisen der Verbrauchsparameter und/oder der Verschleißparameter und/oder der Fahrtdauerparameter ermittelt wird, und
- individuell für jede der vorgegebenen Fahrweisen der Verbrauchsparameter und/oder der Verschleißparameter und/oder der Fahrtdauerparameter dem Kraftfahrzeugführer angezeigt wird.

6. Betriebsverfahren nach Anspruch 5, wobei
- mehrere verschiedene Fahrweisen für das Kraftfahrzeug vorgegeben werden, und
- der Verbrauchsparameter und/oder der Verschleißparameter und/oder der Fahrtdauerparameter als Relativwerte ermittelt werden, wobei die Relativwerte die Unterschiede zwischen den verschiedenen Fahrweisen wiedergeben.

7. Betriebsverfahren nach Anspruch 6, wobei eine der vorgegebenen Fahrweisen als Referenzwert dient und einen minimalen Kraftstoffverbrauch oder einen minimalen Verschleiß oder eine minimale Fahrtdauer aufweist.

8. Betriebsverfahren nach einem der vorhergehenden Ansprüche, wobei der Verschleißparameter mindestens eine der folgende Größen wiedergibt:
- Reifenabrieb,
- Mechanischer Verschleiß oder Standzeit von Bauteilen des Kraftfahrzeugs, nämlich von Bauteilen des Antriebsstrangs, insbesondere von Motor, Getriebe, Kupplung, Bremse.

9. Betriebsverfahren nach einem der vorhergehenden Ansprüche, wobei die vorgegebenen Fahrweisen die folgenden Fahrweisen umfassen:
- Wenden des Lastkraftwagens ohne Befahren eines Umwegs, insbesondere im Stand,
- Wenden des Lastkraftwagens durch Befahren einer Wendestrecke, insbesondere einer Wendestrecke mit einem Kreisverkehr.

10. Betriebsverfahren nach einem der vorhergehenden Ansprüche, wobei
- die Fahrweise von dem Kraftfahrzeugführer vorgegeben wird, oder
- die Fahrweise von einem Navigationssystem (1) als Routenvorschlag vorgegeben wird.

11. Betriebsverfahren nach einem der vorhergehenden Ansprüche, weiterhin mit folgenden Schritten:
- Bestimmen eines Rangwerts für die verschiedenen Fahrweisen aus dem Verbrauchsparameter und dem Verschleißparameter und dem Fahrtdauerparameter der einzelnen Fahrweisen, wobei der Verbrauchsparameter und der Verschleißparameter und der Fahrtdauerparameter mit vorgegebenen Gewichtungsfaktoren gewichtet werden,
- Auswahl einer der Fahrweisen in Abhängigkeit von den ermittelten Rangwerten als optimale Fahrweise,
- Anzeigen der optimalen Fahrweise für den Kraftfahrzeugführer.

12. Fahrerassistenzsystem für ein Kraftfahrzeug, insbesondere für einen Lastkraftwagen, zur Unterstützung eines Kraftfahrzeugführers bei der Wahl einer verbrauchsmindernden Fahrweise, wobei das Fahrerassistenzsystem das Betriebsverfahren nach einem der vorhergehenden Ansprüche ausführt.

13. Fahrerassistenzsystem nach Anspruch 12, mit
- einem Navigationssystem (1), das verschiedene alternative Routenvorschläge entsprechend verschiedenen Fahrweisen vorgibt, und
- einer ersten Recheneinheit (2), die für die verschiedenen Routenvorschläge den Verbrauchsparameter, den Verschleißparameter und/oder den Fahrtdauerparameter berechnet, und
- einer Anzeigeeinheit (3) zur Anzeige des Verbrauchsparameters, des Verschleißparameters und/oder des Fahrtdauerparameters für die verschiedenen alternativen Fahrtrouten.

14. Fahrerassistenzsystem nach Anspruch 13, mit einer zweiten Recheneinheit (2), die
- für jeden der alternativen Routenvorschläge einen Rangwert aus dem Verbrauchsparameter, dem Verschleißparameter und/oder dem Fahrtdauerparameter berechnet und
- einen der alternativen Routenvorschläge in Abhängigkeit von dem Rangwert als optimalen Routenvorschlag auswählt.

## Claims

1. Operating method for a driver assistance system for a motor vehicle, in particular for a lorry, for assisting a motor vehicle driver in selecting a consumption-reducing method of driving, having the following steps:
- predefinition of the method of driving of the motor vehicle,
- determination of a consumption parameter of the motor vehicle for the predefined method of driving, wherein the consumption parameter represents the fuel consumption of the motor vehicle when applying the predefined method of driving,
- displaying of the consumption parameter for the motor vehicle driver,
**characterized by** the following steps:
- determination of a wear parameter of the motor vehicle for the predefined method of driving, wherein the wear parameter represents the wear of the motor vehicle or of part of the motor vehicle during the predefined method of driving, and
- displaying of the wear parameter for the motor vehicle driver,
wherein the wear parameter represents at least one of the following variables:
- service life of the tyres of the motor vehicle,
- service life of components of the motor vehicle.

2. Operating method according to Claim 1, also having the following steps:
- determination of a journey duration parameter for the predefined method of driving, wherein the journey duration parameter represents the journey duration of the motor vehicle during the predefined method of driving, and
- displaying of the journey duration parameter for the motor vehicle driver.

3. Operating method according to one of the preceding claims, wherein
- the consumption parameter and/or the wear parameter and/or the journey duration parameter are measured and determined in a retroactive fashion after the motor vehicle has completed the predefined method of driving, and
- the consumption parameter and/or the wear parameter and/or the journery duration parameter are displayed to the vehicle driver after the motor vehicle has completed the predefined method of driving.

4. Operating method according to one of Claims 1 and 2, wherein
- the consumption parameter and/or the wear parameter and/or the journey duration parameter are calculated in a prognostic fashion for the case in which the motor vehicle is operated in accordance with the predefined method of driving, and
- the consumption parameter and/or the wear parameter and/or the journey duration parameter are displayed to the vehicle driver before the motor vehicle has completed the predefined method of driving.

5. Operating method according to one of the preceding claims, wherein
- a plurality of different methods of driving are predefined for the motor vehicle, and
- the consumption parameter and/or the wear parameter and/or the journey duration parameter are determined individually for each of the predefined methods of driving, and
- the consumption parameter and/or the wear parameter and/or the journey duration parameter are displayed to the motor vehicle driver individually for each of the predefined methods of driving.

6. Operating method according to Claim 5, wherein
- a plurality of different methods of driving are predefined for the motor vehicle, and
- the consumption parameter and/or the wear parameter and/or the journey duration parameter are determined as relative values, wherein the relative values represent the differences between the different methods of driving.

7. Operating method according to Claim 6, wherein one of the predefined methods of driving serves as a reference value and has a minimum fuel consumption or a minimum wear or a minimum journey duration.

8. Operating method according to one of the preceding claims, wherein the wear parameter represents at least one of the following variables:
- tyre wear,
- mechanical wear or service life of components of the motor vehicle, i.e. of components of the drive train, in particular of the engine, transmission, clutch, brake.

9. Operating method according to one of the preceding claims, wherein the predefined methods of driving comprise the following methods of driving:
- turning of the lorry without taking a detour, in particular in the stationary state,
- turning of the lorry by travelling along a turning distance, in particular a turning distance with a roundabout.

10. Operating method according to one of the preceding claims, wherein
- the method of driving is predefined by the motor vehicle driver, or
- the method of driving is predefined by a navigation system (1) as a route proposal.

11. Operating method according to one of the preceding claims, also having the following steps:
- determination of a ranking value for the various methods of driving from the consumption parameter and the wear parameter and the journey duration parameter of the individual methods of driving, wherein the consumption parameter and the wear parameter and the journey duration parameter are weighted with predefined weighting factors,
- selection of one of the methods of driving as a function of the determined ranking values as an optimum method of driving, and
- displaying of the optimum method of driving for the motor vehicle driver.

12. Driver assistance system for a motor vehicle, in particular for a lorry, for assisting a motor vehicle driver during the selection of a consumption-reducing method of driving, wherein the driver assistance system carries out the operating method according to one of the preceding claims.

13. Driver assistance system according to Claim 12, having
- a navigation system (1) which predefines different alternative route proposals corresponding to different methods of driving, and
- a first computing unit (2) which calculates the consumption parameter, the wear parameter and/or the journey duration parameter for the different route proposals, and
- a display unit (3) for displaying the consumption parameter, the wear parameter and/or the journey duration parameter for the different alternative routes.

14. Driver assistance system according to Claim 13, having a second computing unit (2) which
- calculates a ranking value for each of the alternative route proposals from the consumption parameter, the wear parameter and/or the journey duration parameter, and
- selects one of the alternative route proposals as a function of the ranking value as an optimum route proposal.

## Revendications

1. Procédé de fonctionnement d'un système d'assistance au conducteur d'un véhicule automobile, en particulier d'un camion, pour assister un conducteur de véhicule automobile dans le choix d'un mode de conduite à faible consommation de carburant, comprenant les étapes suivantes :
- la spécification du mode de conduite du véhicule automobile,
- la détermination d'un paramètre de consommation du véhicule automobile pour le mode de conduite spécifié, le paramètre de consommation traduisant la consommation de carburant du véhicule automobile pour le mode de conduite spécifié,
- l'affichage du paramètre de consommation à l'intention du conducteur,
**caractérisé par** les étapes suivantes :
- la détermination d'un paramètre d'usure du véhicule automobile pour le mode de conduite spécifié, le paramètre d'usure représentant l'usure du véhicule automobile ou d'une partie du véhicule automobile pour le mode de conduite spécifié, et
- l'affichage du paramètre d'usure à l'intention du conducteur du véhicule automobile, le paramètre d'usure représentant au moins l'une des grandeurs suivantes :
- la durée de vie des pneumatiques du véhicule automobile,
- la durée de vie de composants du véhicule automobile.

2. Procédé de fonctionnement selon la revendication 1, comprenant en outre les étapes suivantes :
- la détermination d'un paramètre de durée de conduite pour le mode de conduite spécifié, le paramètre de durée de conduite représentant la durée de conduite du véhicule automobile dans le mode de conduite spécifié, et
- l'affichage du paramètre de durée de conduite à l'intention du conducteur.

3. Procédé de fonctionnement selon l'une des revendications précédentes, dans lequel
- le paramètre de consommation et/ou le paramètre d'usure et/ou le paramètre de durée de conduite sont mesurés et déterminés a posteriori après que le véhicule automobile a mis en œuvre le mode de conduite spécifié, et
- le paramètre de consommation et/ou le paramètre d'usure et/ou le paramètre de durée de conduite est affiché à l'intention du conducteur après que le véhicule automobile a mis en œuvre le mode de conduite spécifié.

4. Procédé de fonctionnement selon l'une des revendications 1 ou 2, dans lequel
- le paramètre de consommation et/ou le paramètre d'usure et/ou le paramètre de durée de conduite est calculé de manière pronostique pour le cas où le véhicule automobile est utilisé selon le mode de conduite spécifié, et
- le paramètre de consommation et/ou le paramètre d'usure et/ou le paramètre de durée de conduite est affiché à l'intention du conducteur avant que le véhicule automobile ait mis en œuvre le mode de conduite spécifié.

5. Procédé de fonctionnement selon l'une des revendications précédentes, dans lequel
- plusieurs modes de conduite différents sont spécifiés pour le véhicule automobile, et
- le paramètre de consommation et/ou le paramètre d'usure et/ou le paramètre de temps de conduite est déterminé individuellement pour chacun des modes de conduite spécifiés, et
- le paramètre de consommation et/ou le paramètre d'usure et/ou le paramètre de durée de conduite est affiché individuellement à l'intention du conducteur du véhicule automobile pour chacun des modes de conduite spécifiés.

6. Procédé de fonctionnement selon la revendication 5, dans lequel
- plusieurs modes de conduite différents sont spécifiés pour le véhicule automobile, et
- le paramètre de consommation et/ou le paramètre d'usure et/ou le paramètre de temps de conduite sont déterminés en tant que valeurs relatives, les valeurs relatives traduisant les différences entre les différents modes de conduite.

7. Procédé de fonctionnement selon la revendication 6, dans lequel l'un des modes de conduite spécifiés sert de valeur de référence et présente une consommation de carburant minimale ou une usure minimale ou un temps de conduite minimal.

8. Procédé de fonctionnement selon l'une des revendications précédentes, dans lequel le paramètre d'usure représente au moins l'une des grandeurs suivantes :
- l'usure des pneumatiques,
- l'usure mécanique ou la durée de vie de composants du véhicule automobile, à savoir de composants de la chaîne de traction, en particulier du moteur, de la transmission, de l'embrayage, des freins.

9. Procédé de fonctionnement selon l'une des revendications précédentes, dans lequel les modes de conduite spécifiés comprennent les modes de conduite suivants :
- diriger le camion sans faire de détour, en particulier à l'arrêt,
- diriger le camion en passant par une section de virage, en particulier une section de virage avec rond-point.

10. Procédé de fonctionnement selon l'une des revendications précédentes, dans lequel
- le mode de conduite est spécifié par le conducteur du véhicule automobile,
- ou le mode de conduite est spécifié par un système de navigation (1) en tant que proposition d'itinéraire.

11. Procédé de fonctionnement selon l'une des revendications précédentes, comprenant en outre les étapes suivantes :
- la détermination d'une valeur de classement pour les différents modes de conduite à partir du paramètre de consommation et du paramètre d'usure et du paramètre de durée de conduite des modes de conduite individuels, le paramètre de consommation, le paramètre d'usure et le paramètre de durée de conduite étant pondérés par des facteurs de pondération spécifiés,
- la sélection de l'un des modes de conduite en fonction des valeurs de classement déterminées en tant que mode de conduite optimal,
- l'affichage du mode de conduite optimal à l'intention du conducteur.

12. Système d'assistance au conducteur pour un véhicule automobile, en particulier pour un camion, destiné à assister le conducteur d'un véhicule automobile dans le choix d'un mode de conduite à faible consommation de carburant, dans lequel le système d'assistance au conducteur met en œuvre le procédé de fonctionnement selon l'une des revendications précédentes.

13. Système d'assistance au conducteur selon la revendication 12, comprenant
- un système de navigation (1) qui fournit diverses propositions d'itinéraires alternatifs correspondant à différents modes de conduite, et
- une première unité de calcul (2) qui calcule le paramètre de consommation, le paramètre d'usure et/ou le paramètre de durée de conduite pour les différentes propositions d'itinéraires, et
- une unité d'affichage (3) pour l'affichage du paramètre de consommation, du paramètre d'usure et/ou du paramètre de durée de conduite pour les différents itinéraires alternatifs.

14. Système d'assistance au conducteur selon la revendication 13, comportant une seconde unité de calcul (2) qui
- calcule une valeur de classement pour chacune des propositions d'itinéraires alternatifs à partir du paramètre de consommation, du paramètre d'usure et/ou du paramètre de durée de conduite et
- sélectionne l'une des propositions d'itinéraires alternatifs en tant que proposition d'itinéraire optimale en fonction de la valeur de classement.
